# FASCICULE DE BREVET EUROPEEN

(11) **EP 1 121 283 B1**
(45) Date de publication et mention de la délivrance du brevet: **18.06.2003**
(21) Numéro de dépôt: 99949071.7
(22) Date de dépôt: 19.10.1999
(51) Int. Cl.: B60T 11/232

(54) **MAITRE-CYLINDRE A CANAL DE REALIMENTATION VARIABLE**
HAUPTZYLINDER MIT VARIABELEM NACHFÜLLKANAL
MASTER CYLINDER WITH VARIABLE REFILL PASSAGE

(30) Priorité: 20.10.1998 FR 9813185
(43) Date de publication de la demande: 08.08.2001
(73) Titulaire: BOSCH SISTEMAS DE FRENADO, S.L., 08080 Barcelona 6 (ES)
(72) Inventeur: GAULT, Olivier, Bosch Systèmes de Freinage, 93700 Drancy (FR)
(74) Mandataire: Hurwic, Aleksander Wiktor
(86) Numéro de dépôt international: FR9902537
(87) Numéro de publication internationale: WO00023306

(56) Documents cités:
- DE-A- 3 338 252
- US-A- 5 154 107

## Description

La présente invention concerne de façon générale les maîtres-cylindres utilisés comme générateurs de pression hydraulique dans les systèmes de freinage de véhicules à moteurs.

Plus précisément, l'invention concerne un maître-cylindre hydraulique du type de ceux qui comprennent : un corps percé d'un alésage axial de diamètre déterminé, délimité par une paroi au moins partiellement cylindrique dont une première extrémité forme une ouverture partiellement obturée par une bague de guidage fixée au corps, et dont une seconde extrémité est fermée par un fond, ce corps présentant un perçage formant une entrée pour un fluide hydraulique à basse pression; un piston de forme cylindrique, traversant la bague de guidage, monté axialement coulissant dans l'alésage entre une position de repos et une position extrême d'actionnement, et délimitant dans l'alésage une chambre de pression de volume variable; une coupelle d'étanchéité amont, rendue solidaire du corps et enserrant le piston de façon étanche; une coupelle d'étanchéité aval solidaire du piston et coopérant avec ce piston pour obturer la chambre de pression de façon étanche, la coupelle aval étant plus proche du fond du corps que la coupelle amont; au moins un premier ressort appliquant au piston une première force axiale qui le sollicite vers sa position de repos; et un canal de réalimentation radial reliant l'entrée de fluide à la chambre de pression lorsque le piston est dans sa position de repos.

Les maîtres-cylindres de ce type sont bien connus dans l'art antérieur, tel qu'illustré par exemple par le brevet US - 5 154 107.

Conformément à l'enseignement de ce brevet, le canal de réalimentation est constitué par un perçage radial qui, dans la mesure où il a une section circulaire, doit présenter un diamètre relativement important pour assurer correctement la fonction qui lui est assignée.

Or, cette contrainte a pour effet d'une part d'augmenter la longueur axiale du maître-cylindre, et d'autre part d'augmenter la fatigue de la coupelle aval à l'endroit où cette coupelle passe sur le canal de réalimentation.

La présente invention se situe dans ce contexte et vise à se libérer de la contrainte précitée et des inconvénients qu'elle entraîne.

A cette fin, le maître-cylindre selon l'invention, par ailleurs conforme à la définition qui en est donnée dans le préambule ci-dessus, est essentiellement caractérisé en ce qu'une bague axialement coulissante, entourant le piston et de même diamètre que l'alésage, est disposée dans le corps entre la bague de guidage et la chambre de pression, en ce qu'un second ressort applique à la bague coulissante une seconde force axiale, d'intensité inférieure à la première force, repoussant la bague coulissante à distance de la bague de guidage, en ce que le piston et la bague coulissante présentent des butées respectives qui coopèrent pour permettre un entraînement axial de la bague coulissante par le piston lorsque le piston regagne sa position de repos, et en ce que le canal de réalimentation comprend un espace annulaire de longueur axiale variable, défini entre un bord antérieur de la bague coulissante et un évasement de l'alésage axial, adjacent à ce bord antérieur.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en coupe du maître-cylindre connu décrit dans le brevet US - 5 154 107; et
- la Figure 2 est une vue en coupe agrandie des détails pertinents par lesquels un maître-cylindre conforme à l'invention se distingue du maître-cylindre de la figure 1.

L'invention concerne un maître-cylindre hydraulique comprenant principalement un corps 1, une entrée 2 pour un fluide hydraulique à basse pression, un piston 3, une chambre de pression 4, une coupelle d'étanchéité amont 91, une coupelle d'étanchéité aval 92, un ressort 5, et un canal de réalimentation radial 21.

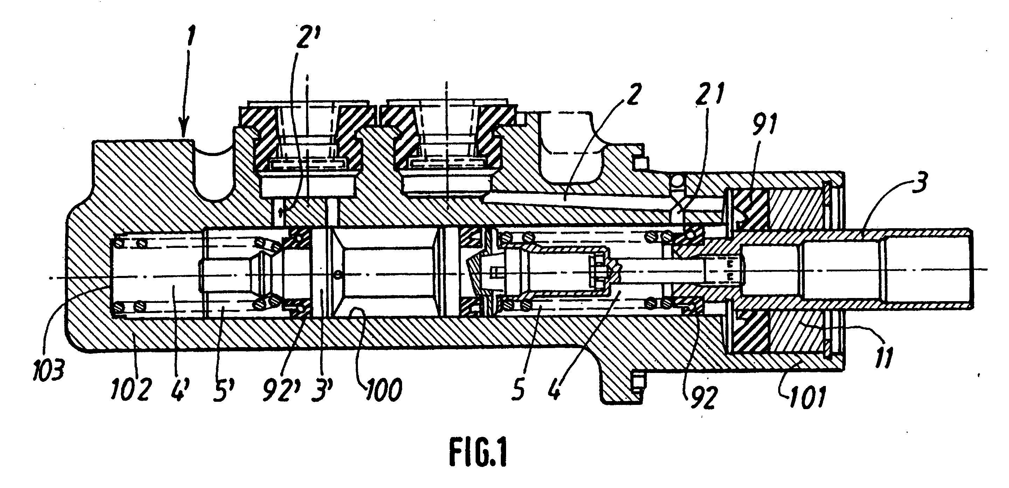

Comme le montre la figure 1, les composants précédemment cités peuvent être dupliqués de façon bien connue dans un étage secondaire, comprenant des composants comparables tels que 2', 3', 4', 5', et 92', dans le cas où le maître-cylindre de l'invention est un maître-cylindre tandem.

Le corps 1 est percé d'un alésage axial 100 de diamètre déterminé et délimité par une paroi au moins partiellement cylindrique. Une première extrémité 101 de cette paroi forme une ouverture partiellement obturée par une bague de guidage 11 fixée au corps, et une seconde extrémité 102 de cette paroi est fermée par un fond 103, l'entrée 2 de fluide hydraulique étant constituée par un perçage dans le corps 1.

Le piston 3, de forme cylindrique, traverse la bague de guidage 11 et est monté axialement coulissant dans l'alésage 100 entre une position de repos illustrée sur les figures, et une position extrême d'actionnement située vers la gauche de la position de repos, ce piston 3 recevant de la part du ressort 5 et d'éventuels autres ressorts tels que 5' une force axiale de rappel qui le sollicite vers sa position de repos.

Le piston 3 délimite dans l'alésage 100 une chambre de pression 4 dont le volume est variable et décroît à mesure que le piston 3 évolue de sa position de repos vers sa position extrême d'actionnement.

La coupelle d'étanchéité amont 91 est rendue solidaire du corps et enserre le piston 3 de façon étanche, tandis que la coupelle d'étanchéité aval 92, plus proche du fond 103 du corps que la coupelle amont 91, est rendue solidaire du piston 3 et coopère avec ce dernier pour obturer la chambre de pression 4 de façon étanche.

Le canal de réalimentation radial 21 a pour fonction de relier l'entrée de fluide 2 à la chambre de pression 4 lorsque le piston 3 est dans sa position de repos, de manière à garantir le remplissage de la chambre de pression en fluide hydraulique.

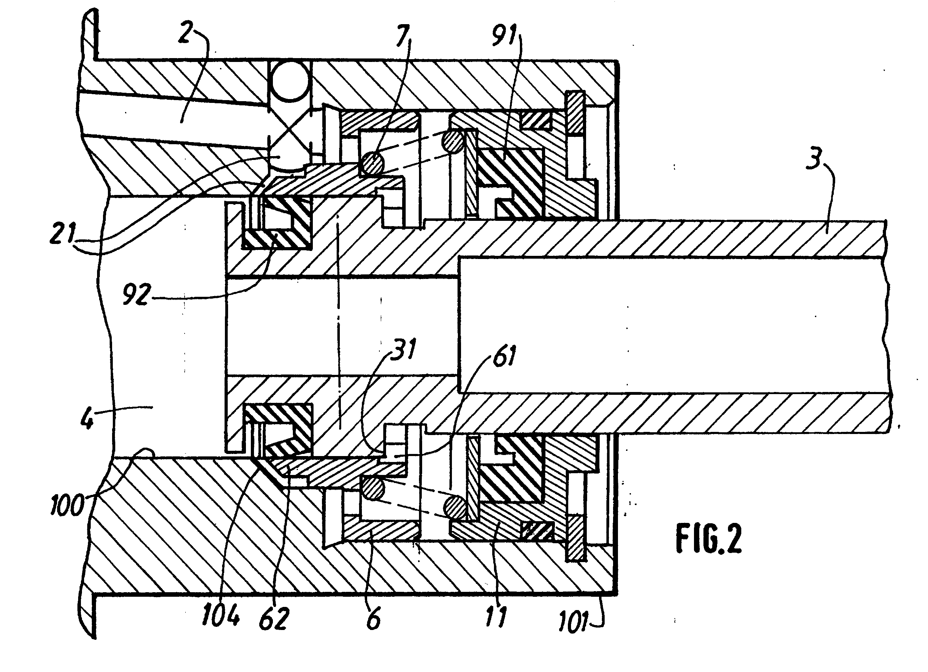

Selon un premier aspect de l'invention (figure 2), une bague 6 est montée axialement coulissante dans le corps 1, entre la bague de guidage 11 et la chambre de pression 4, cette bague 6 ayant un alésage interne cylindrique de même diamètre que l'alésage 100 et entourant le piston 3.

Un ressort 7 applique à la bague coulissante 6 une force axiale, d'intensité inférieure à la force de rappel qui sollicite le piston 3 vers sa position de repos, et qui repousse la bague coulissante 6 à distance de la bague de guidage 11.

Le piston 3 et la bague coulissante 6 présentent des butées respectives 31, 61 qui coopèrent pour permettre au piston 3, lorsqu'il regagne sa position de repos, d'entraîner avec lui la bague coulissante 6 en comprimant le ressort 7 (état illustré à la figure 2).

Enfin, le canal de réalimentation 21 comprend un espace annulaire de longueur axiale variable, qui est défini entre le bord antérieur 62 de la bague coulissante 6 et un évasement 104 de l'alésage axial 100, adjacent à ce bord antérieur 62.

Le fonctionnement des caractéristiques spécifiques du maître-cylindre de l'invention est le suivant.

En l'absence d'actionnement du maître-cylindre, c'est-à-dire lorsque le piston 3 n'est soumis qu'à la force de rappel exercée sur lui notamment par le ressort 5, ce piston est tiré vers la droite et adopte la position de repos illustrée à la figure 2.

La force de rappel exercée sur le piston 3 est transmise à la bague coulissante 6, par l'intermédiaire de la butée 31 du piston et de la butée 61 de la bague coulissante 6, de sorte que cette bague est également tirée vers la droite et adopte la position illustrée à la figure 2, dans laquelle le canal de réalimentation 21, de forme annulaire, est ouvert et permet le remplissage de la chambre de pression 4 en fluide hydraulique.

Lorsque le piston 3 est actionné et se déplace vers la gauche, le ressort 7 peut se détendre et déplace alors la bague 6 dans la même direction, de sorte que le canal de réalimentation 21 se referme.

Grâce à cet agencement, le canal de réalimentation 21 se trouve totalement fermé lorsque la coupelle 92 atteint le bord de l'évasement 104 de l'alésage axial 100, la coupelle ne rencontrant ainsi aucun obstacle susceptible de l'endommager puisque la bague 6 et l'alésage 100 présentent le même diamètre.

## Revendications

1. Maître-cylindre hydraulique comprenant : un corps (1) percé d'un alésage axial (100) de diamètre déterminé, délimité par une paroi au moins partiellement cylindrique dont une première extrémité (101) forme une ouverture partiellement obturée par une bague de guidage (11) fixée au corps, et dont une seconde extrémité (102) est fermée par un fond (103), ce corps présentant un perçage formant une entrée (2) pour un fluide hydraulique à basse pression; un piston (3) de forme cylindrique, traversant la bague de guidage (11), monté axialement coulissant dans l'alésage (100) entre une position de repos et une position extrême d'actionnement, et délimitant dans l'alésage une chambre de pression (4) de volume variable; une coupelle d'étanchéité amont (91), rendue solidaire du corps et enserrant le piston (3) de façon étanche; une coupelle d'étanchéité aval (92) solidaire du piston (3) et coopérant avec ce piston (3) pour obturer la chambre de pression (4) de façon étanche, la coupelle aval (92) étant plus proche du fond (103) du corps que la coupelle amont (91); au moins un premier ressort (5) appliquant au piston (3) une première force axiale qui le sollicite vers sa position de repos; et un canal de réalimentation radial (21) reliant l'entrée de fluide (2) à la chambre de pression (4) lorsque le piston (3) est dans sa position de repos, **caractérisé en ce qu'**une bague axialement coulissante (6), entourant le piston (3) et de même diamètre que l'alésage, est disposée dans le corps (1) entre la bague de guidage (11) et la chambre de pression (4), **en ce qu'**un second ressort (7) applique à la bague coulissante (6) une seconde force axiale, d'intensité inférieure à la première force, repoussant la bague coulissante (6) à distance de la bague de guidage (11), **en ce que** le piston (3) et la bague coulissante (6) présentent des butées respectives (31, 61) qui coopèrent pour permettre un entraînement axial de la bague coulissante (6) par le piston (3) lorsque le piston (3) regagne sa position de repos, et **en ce que** le canal de réalimentation (21) comprend un espace annulaire de longueur axiale variable, défini entre un bord antérieur (62) de la bague coulissante (6) et un évasement (104) de l'alésage axial (100), adjacent à ce bord antérieur (62), le canal de réalimentation (21) étant totalement fermé lorsque la coupelle d'étanchéité aval (92) atteint le bord de l'évasement (104) de l'alésage axial (100).

## Claims

1. Hydraulic master cylinder comprising : a body (1) pierced with an axial bore (100) of given diameter delimited by an at least partially cylindrical wall, a first end (101) of which forms an opening that is partially shut off by a guide ring (11) fixed to the body, and a second end (102) of which is closed by an end wall (103), this body having a drilling forming an inlet (2) for a hydraulic fluid at low pressure; a piston (3) of cylindrical shape passing through the guide ring (11), mounted to slide axially in the bore (100) between a position of rest and an extreme actuating position, and delimiting within the bore a variable-volume pressure chamber (4); an upstream sealing collar (91) secured to the body and gripping the piston (3) in a sealed manner; a downstream sealing collar (92) secured to the piston (3) and co-operating with this piston (3) to shut off the pressure chamber (4) in a sealed manner, the downstream collar (92) being closer to the end wall (103) of the body than is the upstream collar (91); at least a first spring (5) applying to the piston (3) a first axial force which urges it towards its position of rest; and a radial filling duct (21) connecting the fluid inlet (2) to the pressure chamber (4) when the piston (3) is in its position of rest, **characterized in that** an axially sliding ring (6) surrounding the piston (3) and of the same diameter as the bore is placed in the body (1) between the guide ring (11) and the pressure chamber (4), **in that** a second spring (7) applies to the sliding ring (6) a second axial force, lower in intensity than the first force, pushing the sliding ring (6) back away from the guide ring (11), **in that** the piston (3) and the sliding ring (6) have respective stops (31, 61) which co-operate to allow the sliding ring (6) to be driven axially by the piston (3) when the piston (3) returns to its position of rest, and **in that** the filling duct (21) comprises an annular space of variable axial length defined between a front edge (62) of the sliding ring (6) and a flared portion (104) of the axial bore (100), adjacent to this front edge (62), the filling duct (21) being completely closed when the downstream sealing collar (92) reaches the edge of the flared portion (104) of the axial bore (100).

## Patentansprüche

1. Hydraulischer Hauptzylinder mit: einem Körper (1), der mit einer axialen Bohrung (100) mit bestimmtem Durchmesser versehen ist, welche durch eine zumindest teilweise zylindrische Wand begrenzt ist, von welcher ein erstes Ende (101) eine Öffnung bildet, die teilweise mit einem Führungsring (11), der am Körper befestigt ist, verschlossen ist, und von welcher ein zweites Ende (102) durch einen Boden (103) geschlossen ist, wobei dieser Körper eine Bohrung aufweist, die einen Eingang (2) für ein hydraulisches Fluid mit niedrigem Druck bildet; einem Kolben (3) mit zylindrischen Form, der den Führungsring (11) durchquert, in der Bohrung (100) axial gleitend zwischen einer Ruhestellung und einer Betätigungsendstellung angebracht ist und in der Bohrung eine Druckkammer (4) mit variablem Volumen begrenzt; einer vorderen Dichtungsschale (91), die mit dem Körper fest verbunden ist und den Kolben (3) in dichter Weise einspannt; einer hinteren Dichtungsschale (92), die mit dem Kolben (3) fest verbunden ist und mit diesem Kolben (3) zusammenwirkt, um die Druckkammer (4) in dichter Weise zu verschließen, wobei die hintere Schale (92) näher am Boden (103) des Körpers liegt als die vordere Schale (91); mindestens einer ersten Feder (5), die auf den Kolben (3) eine erste axiale Kraft aufbringt, die ihn in seine Ruhestellung beaufschlagt; und einem radialen Nachspeisungskanal (21), der den Fluideingang (2) mit der Druckkammer (4) verbindet, wenn sich der Kolben (3) in seiner Ruhestellung befindet, **dadurch gekennzeichnet, daß** ein axial gleitender Ring (6) der den Kolben (3) umgibt und den gleichen Durchmesser aufweist wie die Bohrung, im Körper (1) zwischen dem Führungsring (11) und der Druckkammer (4) angeordnet ist, daß eine zweite Feder (7) auf den gleitenden Ring (6) eine zweite axiale Kraft aufbringt, deren Intensität geringer ist als jene der ersten Kraft und die den gleitenden Ring (6) im Abstand vom Führungsring (11) zurückschiebt, daß der Kolben (3) und der gleitende Ring (6) jeweilige Anschläge (31, 61) aufweisen, die zusammenwirken, um eine axiale Mitnahme des gleitenden Rings (6) durch den Kolben (3) zu ermöglichen, wenn der Kolben (3) wieder seine Ruhestellung einnimmt, und daß der Nachspeisungskanal (21) einen ringförmigen Raum mit variabler axialer Länge aufweist, der zwischen einem vorderen Rand (62) des gleitenden Rings (6) und einer Aufweitung (104) der axialen Bohrung (100) benachbart zu diesem vorderen Rand (62) definiert ist, wobei der Nachspeisungskanal (21) vollständig geschlossen ist, wenn die hintere Dichtungsschale (92) den Rand der Aufweitung (104) der axialen Bohrung (100) erreicht.
